# EUROPEAN PATENT SPECIFICATION

(11) **EP 2 271 855 B1**
(45) Date of publication and mention of the grant of the patent: **30.05.2012**
(21) Application number: 09794055.5
(22) Date of filing: 08.07.2009
(51) Int. Cl.: F16D 27/112

(54) **PULLEY ASSEMBLY, PARTICULARLY FOR CONTROLLING A WATER PUMP IN A MOTOR VEHICLE**
RIEMENANORDNUNG, INSBESONDERE ZUR STEUERUNG EINER WASSERPUMPE IN EINEM MOTORFAHRZEUG
ENSEMBLE POULIE DESTINÉ EN PARTICULIER À RÉGLER UNE POMPE À EAU D'UN VÉHICULE À MOTEUR

(30) Priority: 09.07.2008 IT TO20080530
(43) Date of publication of application: 12.01.2011
(73) Proprietor: Dayco Europe S.R.L., Chieti (IT)
(72) Inventor: PASTA, Massimo, I-10090 San Bernardo d'Ivrea (IT)
(74) Representative: Mola, Edoardo
(86) International application number: PCT/IB2009/006190
(87) International publication number: WO 2010/004412

(56) References cited:
- EP-A- 1 659 307
- WO-A-2006/056494
- US-A- 3 023 872
- US-A- 3 082 933

## Description

### TECHNICAL FIELD

The present invention relates to a pulley assembly, particularly for controlling a water pump of a vehicle.

### BACKGROUND OF THE INVENTION

In traditional engines, the coolant circulating pump (hereinafter referred to in brief as "water pump") is normally driven by a belt which receives the motion from a pulley on the drive shaft and transmits it to a pulley rotationally fixed on the shaft of the pump.

This configuration implies that the water pump is permanently driven by a speed that depends on that of the drive shaft.

In order to reduce consumption and emissions of vehicles, the engine should reach a thermal regime as rapidly as possible after starting.

For this purpose, pulley assemblies have recently been introduced on the market, which are provided with an electromagnetically activatable clutch that allows to uncouple the pulley from the shaft of the pump. Thereby, the water pump may be disabled during starting and, as the coolant is not circulated, the engine reaches the condition of thermal regime more rapidly.

The electromagnetically activatable clutch normally comprises a hub rotationally fixed on the shaft, an electromagnet fixed to the body of the pump, and a mobile armature which is rotationally coupled to the hub and axially mobile; the armature and/or the pulley are provided with friction or relative engagement means, and the armature is mobile between a resting position in which it disengages the friction means from the pulley and an operative position in which it engages the pulley on the shaft.

Prior art pulleys of this type are disclosed in e.g. EP 1 659 307 or WO 2006/056494.

The electromagnetically activatable clutch raises a series of technical issues, which are often in conflict with one another.

Firstly, this engagement must be fail safe, i.e. it must ensure that the water pump is driven in the absence of external control. This implies the use of elastic means for maintaining the engagement condition of the pulley. These elastic means are subjected to fatigue and therefore the correct dimensioning thereof implies relatively high dimensions.

A second problem is the assembly of the pump on the engine. In the case of non-actuated pulleys, the members of the pump (shaft, impeller, bearings, casing) are preassembled and assembled in an appropriate cavity obtained in the engine, which forms a part of the housing of the pump.

In the case of actuated pumps, i.e. provided with an electromagnetically activatable clutch, the presence of the electromagnetically activatable actuator and in particular of the corresponding springs considerably complicates the mounting cycles.

### OBJECT OF THE INVENTION

It is an object of the present invention to provide a pulley assembly provided with an electromagnetically activatable clutch allowing to obtain the fail-safe function with limited size and to reduce the complexity of the assembly cycle.

The above said object is achieved by a pulley assembly according to claim 1.

The invention also relates to a water pump/pulley assembly for the engine of a vehicle according to claim 8.

### BRIEF DESCRIPTION OF THE DRAWINGS

A preferred embodiment is hereinafter disclosed for a better understanding of the present invention, by way of non-limitative example and with reference to the accompanying drawings, in which:
- figure 1 is an axial section of a water pump/pulley assembly according to the present invention; and
- figure 2 is an exploded perspective view of a detail of the assembly of figure 1.

### BEST MODE OF CARRYING OUT THE INVENTION

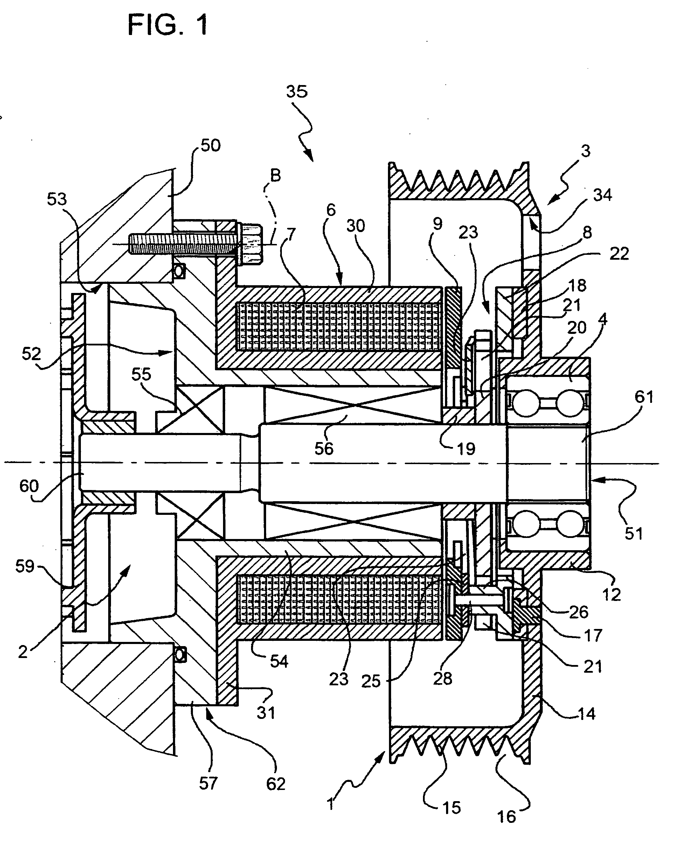

With reference to figure 1, numeral 1 indicates, as a whole, a pulley assembly for driving a water pump 2 for an engine 50 of a vehicle (partially shown).

Water pump 2 comprises a shaft 51 having axis A, which is mounted on a casing 52 adapted to be fixed on engine 50 at a cavity 53 for water pump 2.

More specifically, casing 52 substantially comprises a tubular body 54, in which shaft 51 is housed with the interposition of a seal 55 and a bearing assembly 56 (known and not shown in detail), and an outer radial flange 57 for fastening to engine 50 by means of a plurality of screws 58 having axes B (only one of which is shown in figure 1).

Finally, water pump 2 comprises an impeller 59 rotationally fixed on a first end 60 of shaft 51 arranged in use within seat 53. A second end 61 of shaft 51 axially projects from tubular body 54.

Casing 52 and the inner walls of cavity 53 define as a whole the casing of pump 2. Casing 53, shaft 51 (with corresponding bearing assembly 56 and seal 55) and impeller 59 define as a whole a pre-assemblable pump assembly 62.

Pulley assembly 1 substantially comprises:
a pulley 3 idly mounted by means of a bearing 4 on second end 61 of shaft 51 of pump 2;
an electromagnet 6 arranged externally coaxial to tubular body 54; and
a friction clutch 8 axially interposed between electromagnet 6 and pulley 3.

More precisely, pulley 3 integrally comprises a hub 12 mounted on bearing 4, which is in turn mounted on second end 61 of shaft 51, a disc 14 extending radially from hub 12, and an outer crown 15 provided with V-shaped races 16 adapted to cooperate with corresponding ribs of a poly-V belt (not shown). An annular friction lining 18 is applied by means of rivets 17 on a face of disc 14 facing clutch 8.

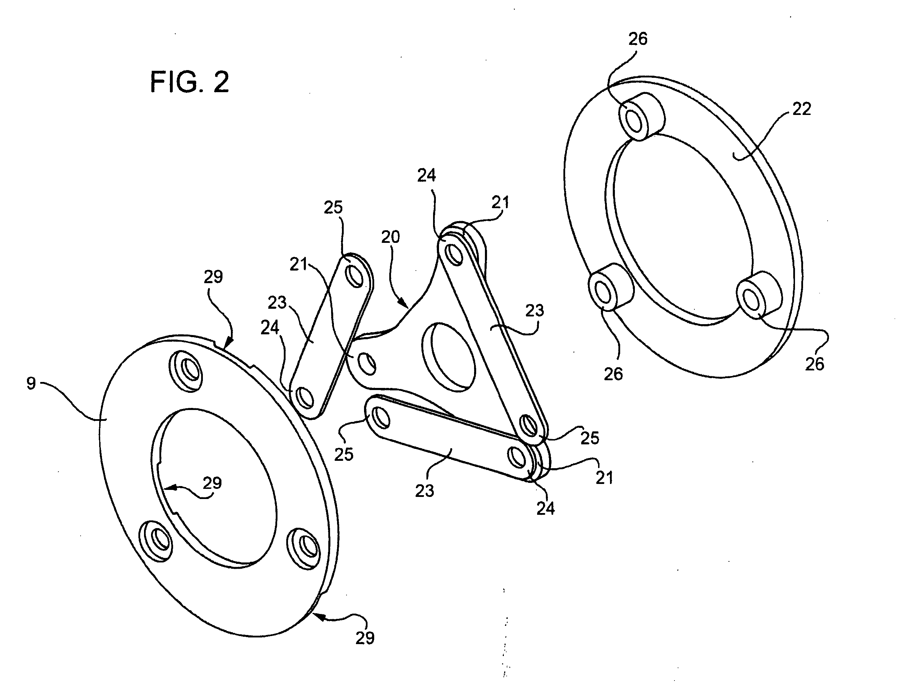

Clutch 8, more clearly shown in figure 2, comprises a hub 20 rotationally fixed on shaft 51 and provided with three radial expansions 21, a friction ring 22 adapted to cooperate with friction lining 18 of pulley 3 and an annular armature 9 axially facing coil 7.

Hub 20 is advantageously force-fitted on shaft 51 in an axial position defined by a spacer element 19 comprised between the hub and bearing assembly 56.

Armature 9 is axially interposed between coil 7 and hub 20, while friction ring 22 is axially interposed between hub 20 and disc 14 of pulley 3.

Clutch 8 also comprises (figure 2) three torsion leaf springs 23, arranged tangentially and each having a first end 24 constrained to a respective radial expansion 21 of hub 20, and a second end 25 constrained to armature 9 and to friction ring 22, and axially clamped therebetween.

More in particular, friction ring 22 has three cylindrical axial protrusions 26, angularly equally spaced from one another, having an axial length greater than the axial thickness of hub 20 (figure 1) and defining respective rests for ends 25 of springs 23.

Armature 9 has, on a surface thereof facing hub 20, three radial grooves 29 for avoiding interference with ends 24 of springs 23.

Springs 23 have an undeformed flat configuration.

Armature 9, ends 25 of springs 23 and friction ring 22 are sandwiched with one another and fastened by means of through-rivets 28. Clutch 8 therefore forms a preassembled assembly.

Electromagnet 6 comprises a coil 7 having a hollow cylindrical shape, which is housed in a hollow cylindrical housing 30 arranged externally coaxial to tubular body 54 of casing 52. Body 30 of electromagnet 6 forms, at an axial end thereof adjacent to flange 57 of casing 52, an outer annular flange 31, which is adapted to be sandwiched with above-said flange 57 and fastened to engine 50 by means of the same screws 58.

Openings 34 for the passage of screws 58 are obtained on disc 14 of pulley 3.

Clutch 8 has a limited axial size, preferably not greater than the size of housing 30 of electromagnet 6 and in any case smaller than flange 31 so as to leave axially accessible at least one fastening area.

The assembly of pump 2 and pulley assembly 1 occurs as follows.

Pump assembly 62 is assembled in a known manner. Subsequently, pulley assembly 1 is assembled on pump assembly 62 before assembling the latter on engine 50.

In particular, electromagnet 6 is fitted on tubular body 54, then, spacer element 19, clutch 8, pulley 3 and bearing 4 are assembled on second end 61 of shaft 51.

It may be noted that upon assembly of clutch 8, springs 23 are arranged in an undeformed flat configuration, i.e. they lie on a plane perpendicular to axis A of shaft 51. When pulley 3 is assembled, friction lining 18 axially comes into contact with friction ring 22 pushing it towards electromagnet 6 (to the left in figure 1). Springs 23 therefore bend and, once assembled, exert an axial force on friction ring 22 biasing it in contact with friction lining 18 of pulley 3.

The assembly formed by pump assembly 62 and pulley assembly 1 forms in turn a pre-assemblable pump/pulley unit 35.

In virtue of the reduced size of clutch 8, made possible by the use of tangential springs 23, and of the presence of openings 34 in pulley 3, screws 58 may be inserted axially following assembly, and allow the assembly of pump/pulley unit 35 on engine 50 without any modification of the assembly cycle with respect to the conventional non-actuated pumps.

The operation of unit 35 is as follows.

When electromagnet 6 is not energized, springs 23 maintain friction element 22 in contact with friction lining 18 and therefore pulley 3 is engaged on the shaft. When electromagnet 6 is energized, it attracts armature 9 and the latter, by axially moving against the action of springs 23, detaches friction element 22 from friction lining 18 and therefore makes pulley 3 idle.

Finally, it is apparent that modifications and variants not departing from the scope of protection of the present invention may be made to pulley assembly 1 and pump/pulley unit 35.

## Claims

1. An electromagnetically activatable pulley assembly (1) for selectively driving a rotating shaft (51), the pulley assembly (1) including a drive pulley adapted to be idly mounted to said shaft (51), an electromagnet (6) adapted to be arranged in a fixed position coaxially to said shaft (51), and a clutch (8) adapted to maintain said pulley (3) engaged on the shaft (51) and to disengage said pulley (3) from the shaft (51) upon energizing said electromagnet (6), said clutch (8) including a hub (20) adapted to be rigidly fixed to said shaft (51), an armature (9) facing said electromagnet (6) and adapted to be axially displaced by the same when energized, a friction element (22) adapted to cooperate with said pulley (3) and axially movable with said armature (9), means (23) for angularly connecting said friction element (22) to said hub (20), and elastic means (23) for maintaining said friction element (22) in an engaged position with said pulley (3) against the action of said electromagnet (6), **characterized in that** said means for angularly connecting said friction element (22) to said hub (20) and said elastic means consist of a plurality of tangentially arranged springs (23), said springs (23) having a first end (24) constrained to said hub (20) and a second end (25) constrained to said armature (9) and to said friction element (22), said clutch (8) being mountable to said shaft (51) as a preassembled assembly.

2. A pulley assembly according to claim 1, **characterized in that** said electromagnet (6) includes an external fastening flange (31), **in that** said clutch (8) has a radial volume smaller than said flange (31) and **in that** said pulley (3) has openings (34) adapted to allow to access the fastening means (58) of said flange (31).

3. A pulley assembly according to claim 1 or 2, **characterized in that** said armature (9) and said friction element (22) are annular and are arranged on axially opposite sides of said hub (20).

4. A pulley assembly according to any one of the preceding claims, **characterized in that** said springs (23) are leaf springs which are flat in an undeformed condition.

5. A pulley assembly according to claim 4, **characterized in that** said second ends (25) of said springs are sandwiched between said armature (9) and said friction element (22).

6. A pulley assembly according to claim 5, **characterized in that** said clutch (8) includes a plurality of rests (26) for said second ends (25) of said springs (23), said rests (26) being arranged on a face of said friction element (22) and being higher than the axial thickness of said hub (20).

7. A pulley assembly according to any one of the claims from 4 to 6, **characterized in that** said springs (23) are deformed upon mounting said pulley (3) to generate a pre-load on said friction element (22) towards said pulley.

8. A water pump/pulley unit (35) for an engine (50) of a motor vehicle, the unit (35) including a preassembled pump assembly (62) including a casing (52) provided with a tubular body (54) and a flange (57) securable to the engine (50), a shaft (51) fluid-tightly mounted in the tubular body (54) and an impeller (59) mounted at one end (60) of the shaft (51), **characterized by** including a pulley assembly (1) according to any one of the preceding claims, said pulley assembly (1) being mountable to said pump assembly (62) to form a pre-assemblable unit.

9. A water pump/pulley unit according to claim 8, **characterized in that** said electromagnet (6) is mounted externally and coaxially to said tubular body (54) of said casing (52), and **in that** said clutch (8) and said pulley (3) are mounted at one end (61) of said shaft (51) opposite to that (60) at which said impeller (59) is mounted.

10. A pump/pulley unit according to claim 9, **characterized in that** said casing (52) includes a flange (57) securable to the engine (50), said flange (31) of said electromagnet (6) being axially overlapping said flange (57) of said casing (52) and fixable by common fastening means (58).

## Patentansprüche

1. Elektromagnetisch aktivierbare Riemenscheibenanordnung (1) zum wahlweise Antreiben einer drehenden Welle (51), wobei die Riemenscheibenanordnung (1) umfasst eine Antriebsriemenscheibe, die ausgelegt ist, um im Leerlauf mit der Welle (51) befestigt zu sein, einen Elektromagneten (6), der ausgelegt ist, um in einer fixierten Position koaxial zu der Welle (51) angeordnet zu werden, und eine Kupplung (8), die ausgelegt ist, um die Riemenscheibe (3) im Eingriff mit der Welle (51) zu halten und die Riemenscheibe von der Welle (51) bei einem Zufuhren von Energie zu dem Elektromagneten (6) außer Eingriff zu bringen, wobei die Kupplung (8) eine Nabe (20) umfasst, die ausgelegt ist, um starr mit der Welle (51) fixiert zu werden, einen Rotor (9), der dem Elektromagneten (6) gegenüberliegt und ausgelegt ist, um axial über denselben versetzt zu werden, wenn mit Strom versorgt, ein Reibungselement (22), das ausgelegt ist, um mit der Riemenscheibe (3) zusammen zu wirken und das axial mit dem Rotor (9) bewegbar ist, ein Mittel (23) für ein winkelförmiges Verbinden des Reibungselements (22) mit der Nabe (20), und ein elastisches Mittel (23) zum Halten des Reibungselements (22) in einer eingreifenden Position mit der Riemenscheibe (3) gegen die Wirkung des Elektromagneten (6), **dadurch gekennzeichnet, dass** das Mittel zum winkelförmigen Verbinden des Reibungselements (22) mit der Nabe (20) und das elastische Mittel aus mehreren tangential angeordneten Federn (23) besteht, wobei die Federn (23) ein erstes Ende (24) umfassen, das von der Nabe (20) eingespannt ist, und ein zweites Ende (25), das von dem Rotor (9) und dem Reibungselement (22) eingespannt ist, wobei die Kupplung (8) als eine vorher zusammengesetzte Baueinheit an der Welle (51) befestigbar ist.

2. Riemenscheibenanordnung gemäß Anspruch 1, **dadurch gekennzeichnet, dass** der Elektromagnet (6) einen äußeren Befestigungsflansch (31) umfasst, dadurch, dass die Kupplung (8) ein radiales Volumen aufweist, das geringer als der Flansch (31) ist und dadurch, dass die Riemenscheibe (3) Öffnungen (34) umfasst, die ausgelegt sind, um einen Zugang zu den Befestigungsmitteln (58) des Flansches (31) zu ermöglichen.

3. Riemenscheibenanordnung gemäß Anspruch 1 oder 2, **dadurch gekennzeichnet, dass** der Rotor (9) und das Reibungselement (22) ringförmig ausgebildet sind und an axial gegenüber liegenden Seiten der Nabe (20) angeordnet sind.

4. Riemenscheibenanordnung gemäß einem der vorstehenden Ansprüche, **dadurch gekennzeichnet, dass** die Federn (23) als Blattfedern ausgebildet sind, die in einem nicht deformierten Zustand flach ausgebildet sind.

5. Riemenscheibenanordnung gemäß Anspruch 4, **dadurch gekennzeichnet, dass** die zweiten Enden (51) der Federn zwischen dem Rotor (9) und dem Reibungselement (22) dazwischen liegend eingepfercht sind.

6. Riemenscheibenanordnung gemäß Anspruch 5, **dadurch gekennzeichnet, dass** die Kupplung (8) mehrere Aufsätze (26) für die zweiten Enden (25) der Federn (23) umfassen, wobei die Aufsätze (26) an einer Seite des Reibungselements (22) angeordnet sind und höher ausgelegt sind als die axiale Stärke der Nabe (20).

7. Riemenscheibenanordnung gemäß einem der Ansprüche 4 bis 6, **dadurch gekennzeichnet, dass** die Federn (23) bis zu einer Befestigung der Riemenscheibe (3) deformiert sind, um eine Vorspannung auf das Reibungselement (22) in Richtung der Riemenscheibe zu erzeugen.

8. Wasserpumpen- Riemenscheiben-Einheit (35) für einen Motor (50) von einem Kraftfahrzeug, bei der die Einheit (35) eine vorher zusammengesetzte Pumpenbaueinheit (62) umfasst mit einem Gehäuse (52), das mit einem rohrförmigen Körper (54) und einem Flansch (57), der an dem Motor (50) befestigbar ist, versehen ist, eine Welle (51), die fluiddicht an dem rohrförmigen Körper (54) befestigt ist und ein Laufrad (59), das an einem Ende (60) von der Welle (51) befestigt ist, gekennzeichnet über eine Riemenscheibenbaueinheit (1) gemäß einem der vorstehenden Ansprüche, wobei die Riemenscheibenbaueinheit (1) an der Pumpenbaueinheit (62) befestigbar ist, um eine vorher zusammensetzbare Einheit zu bilden.

9. Wasserpumpen/Riemenscheiben-Einheit gemäß Anspruch 8, **dadurch gekennzeichnet, dass** der Elektromagnet (6) außen und koaxial zu dem rohrförmigen Körper (54) des Gehäuses (52) befestigt ist, und dadurch, dass die Kupplung (8) und die Riemenscheibe (3) an einem Ende (6 1) von der Welle (5 1) gegenüberliegend zu dem Ende (60), an dem das Laufrad (59) befestigt ist, befestigt sind.

10. Pumpen/Riemenscheiben-Einheit gemäß Anspruch 9, **dadurch gekennzeichnet, dass** das Gehäuse (52) einen Flansch (57) umfasst, der an dem Motor (50) sicherbar ist, wobei der Flansch (31) des Elektromagneten (6) axial den Flansch (57) des Gehäuses (52) überlappt und über ein gemeinsames Befestigungsmittel (58) fixierbar ist.

## Revendications

1. Dispositif (1) à poulie, pouvant être actionné électromagnétiquement et dévolu à l'entraînement sélectif d'un arbre rotatif (51), ledit dispositif (1) à poulie comprenant une poulie d'entraînement conçue pour être montée folle sur ledit arbre (51), un électro-aimant (6) conçu pour être placé dans une position fixe coaxialement audit arbre (51), et un embrayage (8) conçu pour maintenir ladite poulie (3) en prise avec ledit arbre (51), et pour dissocier ladite poulie (3) d'avec ledit arbre (51) lors d'une excitation dudit électro-aimant (6), ledit embrayage (8) comportant un moyeu (20) conçu pour être fixé rigidement audit arbre (51), un induit (9) situé en vis-à-vis dudit électro-aimant (6) et conçu pour être déplacé axialement par ce dernier à l'état excité, un élément de friction (22) conçu pour coopérer avec ladite poulie (3) et apte à accomplir des mouvements axiaux avec ledit induit (9), des moyens (23) affectés à la liaison angulaire dudit élément de friction (22) avec ledit moyeu (20), et des moyens élastiques (23) conçus pour maintenir ledit élément de friction (22) dans une position de coopération avec ladite poulie (3), en opposition à l'action dudit électro-aimant (6), **caractérisé par le fait que** lesdits moyens affectés à la liaison angulaire dudit élément de friction (22) avec ledit moyeu (20), et lesdits moyens élastiques, sont constitués d'une pluralité de ressorts (23) disposés tangentiellement, lesdits ressorts (23) comprenant une première extrémité (24) assujettie audit moyeu (20), et une seconde extrémité (25) assujettie audit induit (9) et audit élément de friction (22), ledit embrayage (8) pouvant être monté sur ledit arbre (51) sous la forme d'un groupe préassemblé.

2. Dispositif à poulie, selon la revendication 1, **caractérisé par le fait que** ledit électro-aimant (6) comporte une bride extérieure de fixation (31) ; **par le fait que** ledit embrayage (8) présente un encombrement radial plus petit que ladite bride (31) ; et **par le fait que** ladite poulie (3) offre des orifices (34) conçus pour autoriser l'accès aux moyens (58) de fixation de ladite bride (31).

3. Dispositif à poulie, selon la revendication 1 ou 2, **caractérisé par le fait que** ledit induit (9) et ledit élément de friction (22) sont annulaires, et sont placés sur des côtés axialement opposés dudit moyeu (20).

4. Dispositif à poulie, selon l'une quelconque des revendications précédentes, **caractérisé par le fait que** lesdits ressorts (23) sont des lames de ressort aplaties à l'état non déformé.

5. Dispositif à poulie, selon la revendication 4, **caractérisé par le fait que** lesdites secondes extrémités (25) desdits ressorts sont prises en sandwich entre ledit induit (9) et ledit élément de friction (22).

6. Dispositif à poulie, selon la revendication 5, **caractérisé par le fait que** ledit embrayage (8) comporte une pluralité de pièces d'appui (26) assignées auxdites secondes extrémités (25) desdits ressorts (23), lesdites pièces d'appui (26) étant implantées sur une face dudit élément de friction (22) et étant plus hautes que l'épaisseur axiale dudit moyeu (20).

7. Dispositif à poulie, selon l'une quelconque des revendications 4 à 6, **caractérisé par le fait que** lesdits ressorts (23) sont déformés au stade du montage de ladite poulie (3) afin d'imposer, audit élément de friction (22), une précontrainte en direction de ladite poulie.

8. Ensemble unitaire (35) pompe à eau/poulie destiné à un moteur (50) de véhicule automobile, ledit ensemble unitaire (35) comportant un groupe de pompage (62) préassemblé, qui présente un carter (52) muni d'un corps tubulaire (54) et d'une bride (57) pouvant être fixée au moteur (50), un arbre (51) monté dans le corps tubulaire (54) avec étanchéité aux fluides, et une hélice (59) montée à l'une (60) des extrémités de l'arbre (51), **caractérisé par** la présence d'un dispositif (1) à poulie, conforme à l'une quelconque des revendications précédentes, ledit dispositif (1) à poulie pouvant être monté sur ledit groupe de pompage (62), en vue de former un ensemble unitaire apte au préassemblage

9. Ensemble unitaire pompe à eau/poulie, selon la revendication 8, **caractérisé par le fait que** ledit électro-aimant (6) est monté extérieurement et coaxialement audit corps tubulaire (54) dudit carter (52) ; et **par le fait que** ledit embrayage (8) et ladite poulie (3) sont montés à l'une (61) des extrémités dudit arbre (51), tournée à l'opposé de celle (60) à laquelle ladite hélice (59) est montée.

10. Ensemble unitaire pompe à eau/poulie, selon la revendication 9, **caractérisé par le fait que** ledit carter (52) comporte une bride (57) pouvant être fixée au moteur (50), ladite bride (31) dudit électro-aimant (6) chevauchant axialement ladite bride (57) dudit carter (52), et pouvant être consignée à demeure par des moyens de fixation (58) communs.
